# FASCICULE DE BREVET EUROPEEN

(11) **EP 2 687 443 B1**
(45) Date de publication et mention de la délivrance du brevet: **08.04.2015**
(21) Numéro de dépôt: 13003373.1
(22) Date de dépôt: 03.07.2013
(51) Int. Cl.: B64D 15/12

(54) **Rotor d'aéronef équipé d'un dispositif de raccordement en énergie électrique entre un moyeu et des pales du rotor**
Rotor eines Luftfahrzeugs, der mit einer Anschlussvorrichtung für elektrische Energie zwischen einer Nabe und den Drehflügelblättern eines Rotors ausgestattet ist
Aircraft rotor provided with an electrical energy connecting device between a hub and blades of the rotor

(30) Priorité: 18.07.2012 FR 1202032
(43) Date de publication de la demande: 22.01.2014
(73) Titulaire: Airbus Helicopters, 13725 Marignane Cedex (FR)
(72) Inventeur: Gaffiero, Jacques, 75017 Paris (FR); Amari, André, 60520 LA Chapelle en Serval (FR); Rinaldi, Bénédicte, 75014 Paris (FR); Broucke, David, 93460 Gournay Sur Marne (FR)
(74) Mandataire: GPI & Associés

(56) Documents cités:
- FR-A1- 2 793 469
- US-A- 3 042 346
- US-A- 5 174 717

## Description

La présente invention est du domaine des équipements pour aéronef équipé d'au moins un rotor, avion à hélice propulsive ou giravion plus spécifiquement. La présente invention relève plus particulièrement des dispositifs de raccordement électrique entre un moyeu et les pales d'un rotor de l'aéronef. Un tel raccordement électrique procure une alimentation en énergie électrique d'un appareil incorporé individuellement à chacune des pales, appareil de dégivrage d'une telle pale par chauffage électrique notamment.

Parmi les aéronefs, il est distingué les aéronefs munis d'au moins un rotor comprenant une pluralité de pales. Les pales sont montées radialement réparties sur un moyeu pour leur entraînement en rotation, le moyeu étant lui-même entraîné en rotation par une source motrice équipant l'aéronef. Une telle source motrice est notamment formée d'une boîte de transmission de puissance qui est mue par un groupe de motorisation équipant l'aéronef.

Par exemple pour un avion dont la portance est obtenue par une voilure fixe, au moins un rotor formé d'une hélice propulsive procure la propulsion en translation de l'avion.

Par exemple encore pour un giravion, au moins une voilure tournante est formée d'un rotor principal à axe sensiblement vertical, qui procure au giravion au moins sa sustentation, sinon aussi sa propulsion en translation et/ou son guidage en vol. Subsidiairement, un giravion est équipé d'un rotor annexe, tel qu'un rotor arrière ou une hélice propulsive dans le cadre d'un giravion rapide à long rayon d'action. Un tel rotor annexe est couramment exploité pour guider le giravion en lacet, voire encore pour le propulser en translation dans le cas d'un rotor formé d'une hélice propulsive du giravion en translation.

Pour faire varier la poussée exercée par une hélice propulsive ou un dit rotor arrière, ou encore pour faire varier la sustentation procurée par un dit rotor principal, les aéronefs à rotor sont munis de moyens pour faire varier le pas collectif des pales de l'un au moins des rotors dont ils sont équipés. Une variation de pas collectif des pales permet d'accroître la poussée exercée par le rotor, telle qu'en portance pour un dit rotor principal, telle qu'en lacet pour un dit rotor arrière, ou telle qu'en propulsion en translation pour une dite hélice propulsive.

Dans le cas spécifique d'un hélicoptère, le rotor principal procure non seulement la sustentation du giravion, mais aussi sa propulsion et/ou son guidage en vol. La variation du pas des pales du rotor principal est non seulement une variation de pas collectif pour modifier la portance et la propulsion du giravion, mais aussi est une variation de pas cyclique pour modifier le comportement en vol du giravion en tangage et en roulis.

Pour permettre une variation de leur pas, collectivement et/ou le cas échéant cycliquement, les pales sont individuellement montées mobiles sur le moyeu en pivotement dans leur plan général, par l'intermédiaire de pieds de pale respectifs. Selon diverses variantes de réalisation, un pied de pale est susceptible d'être incorporé à la pale pour son montage sur le moyeu, ou d'être formé d'un organe de jonction porteur d'une pale et monté sur le moyeu. A titre indicatif, la mobilité en pivotement des pales sur le moyeu est réalisée suivant une variation angulaire pouvant atteindre plus ou moins 120°.

Les pales sont susceptibles d'incorporer ou d'être équipées individuellement d'un ou de plusieurs appareils électriques, tels que notamment un appareil de dégivrage. Se pose le problème de l'implantation sur le rotor des moyens d'acheminement de l'énergie électrique depuis le moyeu vers les pales malgré leur mobilité en pivotement sur le moyeu.

Le moyeu est doté d'une source de prélèvement en énergie électrique permettant d'alimenter les dits appareils électriques équipant individuellement les pales. Une telle source de prélèvement est approvisionnée en énergie électrique à partir d'une source d'énergie électrique équipant l'aéronef, telle qu'un réseau de bord électrique ou toute autre ressource en énergie électrique équipant l'aéronef. Le moyeu est muni de moyens de jonction électrique au dit réseau de bord par l'intermédiaire d'un mât porteur du moyeu. De tels moyens de jonction sont par exemple des moyens tournant à balais frottant, ou autres moyens analogues de jonction électrique entre deux organes mobiles en rotation l'un par rapport à l'autre.

Chaque pale est électriquement raccordée à ladite source de prélèvement par l'intermédiaire d'une liaison filaire souple de raccordement d'un connecteur du moyeu avec un connecteur de la pale. La liaison filaire est susceptible d'être composée d'un ou de plusieurs câbles selon les besoins d'alimentation en énergie électrique de la pale. Il est traditionnellement mis à profit la souplesse et une longueur adéquate de ladite liaison filaire pour maintenir le raccordement entre la pale et la source de prélèvement, malgré la mobilité en pivotement des pales sur le moyeu.

Cependant, les pales sont placées sur le giravion en milieu hostile et sont soumises à des forces centrifuges importantes. Les liaisons filaires supportent de tels milieux hostiles et forces centrifuges, en sus des contraintes en torsion qu'elles subissent sous l'effet du pivotement des pales. Les liaisons filaires doivent être en conséquence d'une structure robuste, qui doit néanmoins être compatible avec leur souplesse recherchée. Cependant, des opérations de maintenance fréquentes sont nécessaires. De telles opérations de maintenance sont coûteuses, tant au regard du coût intrinsèque des liaisons filaires qu'au regard des opérations à effectuer pour leur remplacement.

De surcroît, outre leur équipement individuel en appareil de dégivrage, les pales sont encore potentiellement équipées de divers appareils électriques. Par exemple, il est connu d'incorporer aux pales un dispositif permettant de faire varier l'incidence des pales par vrillage dans leur plan général. De tels dispositifs mettent communément en oeuvre au moins un appareil électrique qu'il est nécessaire d'alimenter en énergie électrique. Une telle complexification des pales induit une multiplication des câbles devant être intégrés aux liaisons filaires à l'encontre de leur souplesse recherchée, ou une multiplication de dites liaisons filaires pour chacune des pales.

Dans ce contexte, diverses solutions ont été proposées pour pallier aux inconvénients induits par les fréquentes opérations de maintenance des liaisons filaires.

Il a par exemple été proposé de simplifier les modalités de raccordement des liaisons filaires respectivement au moyeu et aux pales, pour faciliter l'exécution des opérations de maintenance.

Il a par exemple encore été proposé de préserver les liaisons filaires de l'environnement hostile du rotor, en les protégeant par un capot. Une telle solution de protection présente cependant l'inconvénient d'affecter la mobilité des liaisons filaires sur elles-mêmes, avec pour conséquence une difficulté pour les liaisons filaires d'accompagner les mouvements en pivotement des pales, voire encore de s'adapter en conformation sous l'effet des forces centrifuges générées sous l'effet de la rotation du rotor.

Pour appréhender les difficultés à surmonter et connaître un environnement technologique proche dans le cadre de la présente invention, on pourra se référer aux documents US5174717 (SAFEWAY PRODUCTS INC) et US6358006 (THE BF GOODRICH COMPAGNY), voire encore au document US5709532 (GOODRICH CO B.F.) et au document FR2793469 (WL GORE AS. INC.).

Il a aussi été proposé par le document US 3 042 346 (HAWLEY JAMES F), d'équiper une hélice propulsive de flasques guidant entre eux un câble élastiquement déformable reliant électriquement une pale pivotante à un moyeu tournant de l'hélice propulsive. Le câble est contenu dans un espace le préservant des forces centrifuges générées sous l'effet de la rotation du rotor, la faculté du câble à se déformer élastiquement permettant de faire varier la longueur d'extension du câble entre la pale et le moyeu pour accompagner le pivotement de la pale sur le moyeu.

Le but de la présente invention est de proposer un rotor d'aéronef dont les pales sont chacune munies d'au moins un appareil électrique, appareil de dégivrage notamment. Un tel rotor d'aéronef est potentiellement une hélice propulsive d'un avion à hélice ou d'un giravion rapide à long rayon d'action, ou encore est un rotor principal ou un rotor annexe d'un giravion.

Le rotor d'aéronef à voilure tournante de la présente invention est notamment équipé d'un dispositif de raccordement en énergie électrique entre un moyeu et les pales du dit rotor. Un tel dispositif de raccordement est organisé pour acheminer de l'énergie électrique vers chacune des pales depuis une source de prélèvement d'énergie électrique équipant le moyeu, afin d'alimenter en énergie électrique au moins un dit appareil électrique incorporé à chacune des pales. Un tel dispositif de raccordement met notamment en oeuvre un jeu de liaisons filaires, chacune munies à leurs extrémités de connecteurs coopérant avec des connecteurs montés respectivement sur le moyeu et sur les pales.

Il est notamment recherché par la présente invention, dans le cadre des contraintes qui ont été énoncées, de réduire les coûts induits par les opérations de maintenance des liaisons filaires que comprend le dispositif de raccordement électrique.

Il est plus particulièrement visé par la présente invention de limiter les effets délétères produits sur les dites liaisons filaires par l'environnement hostile du rotor, par les forces centrifuges générées sous l'effet de sa mise en rotation et par les contraintes en mobilité des liaisons filaires induites par le pivotement des pales.

Il est encore plus particulièrement visé par la présente invention d'équiper le rotor d'un dit dispositif de raccordement, apte à alimenter une pluralité d'appareils électriques distincts susceptibles d'équiper individuellement chacune des pales.

La potentialité optimisée d'alimentation en énergie électrique de plusieurs appareils électriques équipant individuellement les pales, est de surcroît recherchée en limitant les coûts structurels et de maintenance du dispositif de raccordement. Il est notamment recherché d'éviter de complexifier outre mesure le dispositif de raccordement, en évitant essentiellement de complexifier les modalités de jonction tant électrique que mécanique des liaisons filaires avec le moyeu et chacune des pales, tout en optimisant le nombre de chemins électriques affectés à chacune des pales et en préservant au mieux les liaisons filaires des diverses contraintes auxquelles elles sont amenées à être soumises.

Le rotor d'aéronef à voilure tournante de la présente invention est équipé d'un dispositif de raccordement en énergie électrique entre un moyeu et des pales du dit rotor. Les pales sont chacune munies d'un pied de pale par l'intermédiaire duquel les pales sont individuellement montées mobiles en pivotement dans leur plan général sur le moyeu autour d'un axe de pivotement. Le pied de pale est indifféremment intégré à la pale ou formé d'un organe de jonction, tel qu'agencé en manchon ou analogue. Un tel organe de jonction est porteur solidaire de la pale et est monté mobile en pivotement sur le moyeu.

Le dit dispositif de raccordement comprend notamment pour chacune des pales au moins une liaison filaire, qui relie, par l'intermédiaire de connecteurs dont elle est équipée à ses extrémités, un connecteur de moyeu porté par le moyeu à un connecteur de pale porté par la pale.

Le dit dispositif de raccordement comprend aussi des moyens d'attache de la liaison filaire entre ses extrémités, respectivement au moyeu et au pied de pale en accompagnement de la mobilité en pivotement du pied de pale. Les connecteurs d'extrémité de la liaison filaire coopèrent respectivement avec le connecteur de moyeu et le connecteur de pale pour alimenter la pale en énergie électrique.

Le dit dispositif de raccordement comprend encore pour chacune des pales un chemin de guidage de la liaison filaire entraînée en mobilité sous l'effet d'un dit pivotement de la pale dans son plan général.

Selon la présente invention, un tel rotor est principalement reconnaissable en ce que, pour chacune des pales, le chemin de guidage comprend des moyens de mise sous tension élastique de la liaison filaire, la liaison filaire étant guidée mobile sur elle-même sous tension par le dit chemin en accompagnement de la mobilité en pivotement du pied de pale.

Les moyens de mise sous tension que comprend le chemin de guidage procurent un maintien en conformation de la liaison filaire le long du chemin de guidage malgré sa mobilité sur elle-même provoquée par un pivotement de la pale. De tels moyens de mise sous tension confortent l'accompagnement par le chemin de guidage de la mobilité de la liaison filaire sur elle-même, un tel confort d'accompagnement étant procuré malgré une amplitude potentiellement conséquente de la mobilité de la liaison filaire sur elle-même et malgré les entrainements répétés de la liaison filaire, éventuellement en inversion de sens de circulation le long du chemin.

De telles dispositions permettent avantageusement :
- ) de limiter les tensions subies par la liaison filaire, sous l'effet du pivotement de la pale à laquelle elle est raccordée, et notamment permettent d'éviter de telles tensions susceptibles d'être subies par la liaison filaire en torsion.
- ) de préserver la liaison filaire de tensions susceptibles d'être induites par la force centrifuge à laquelle elle est soumise sous l'effet de la rotation du moyeu, la liaison filaire étant maintenue en conformation par le chemin de guidage malgré sa mobilité sur elle-même. Le maintien en conformation de la liaison filaire est susceptible d'être réalisé suivant une configuration librement choisie selon l'agencement du chemin de guidage.
- ) d'alléger structurellement le renfort nécessaire de la liaison filaire, pour conforter sa souplesse sans pour autant favoriser sa dégradation sous l'effet des contraintes auxquelles la liaison filaire est susceptible d'être globalement soumise.
- ) de simplifier les modalités de raccordement entre les connecteurs équipant la liaison filaire et les connecteurs équipant respectivement le moyeu et le pied de pale. Une telle simplification est notamment autorisée par ladite préservation de tensions subies par la liaison filaire et par le dit allègement de sa structure, et permet d'agencer un assemblage facilement réversible entre les connecteurs équipant la liaison filaire avec ceux équipant le moyeu et le pied de pale, de tels connecteurs pouvant être réduits à des fiches coaxiales.

De tels avantages permettent encore d'agencer avantageusement la liaison filaire en nappe flexible intégrant au moins un et de préférence une pluralité de câbles. Une telle nappe flexible peut aisément être maintenue dans son plan général par le chemin en évitant de solliciter les dits câbles en déformation. Une telle nappe flexible procurent aussi les avantages d'être obtenue à moindres coûts, et de pouvoir intégrer un nombre important de câbles pouvant être exploités individuellement ou par groupe pour l'alimentation en énergie électrique de divers appareils électriques équipant la pale.

Le chemin est notamment un moyen de guidage en mobilité sur elle-même et de maintien en conformation de la liaison filaire. Le chemin peut être avantageusement exploité pour limiter l'encombrement de la liaison filaire et la contenir dans un volume prédéfini, sans affecter la longueur de liaison filaire nécessaire au raccordement entre le connecteur de moyeu et le connecteur de pied de pale.

A cet effet et selon une forme avantageuse de réalisation, le chemin comprend au moins un organe de renvoi de la liaison filaire sur elle-même. Le dit au moins organe de renvoi infléchit la liaison filaire en la conformant en au moins une boucle mobile sur elle-même prenant un appui glissant ou tournant contre un dit organe de renvoi. Une prise d'appui de la liaison filaire contre le dit organe de renvoi induit son inflexion et un renvoi de la liaison filaire sur elle-même, lui conférant sa mise en boucle. La mobilité sur elle-même de la boucle permet de limiter l'encombrement de la liaison filaire, notamment dans le cas d'une liaison filaire agencée en nappe flexible.

Selon une forme préférée de réalisation et pour optimiser la réduction d'encombrement de la liaison filaire, le chemin comprend au moins deux dits organes de renvoi en prise sur les extrémités opposées de la boucle globalement conformée par le chemin de guidage. Les organes de renvoi sont susceptibles d'être multiples, en étant répartis le long du chemin entre deux extrémités de la boucle globalement mise en conformation par le chemin.

Le chemin est de préférence pourvu de plusieurs organes de renvoi permettant d'optimiser une exploitation de la longueur de la liaison filaire comprise dans la boucle, sans pour autant accroître outre mesure l'encombrement global de la liaison filaire. La mise en conformation en boucle de la liaison filaire permet d'optimiser sa longueur disponible pour accompagner un pivotement de la pale selon une amplitude conséquente, telle que de l'ordre de 120° voire davantage. Une adaptation aisée de la longueur filaire est possible pour adapter facilement le dispositif de raccordement à un quelconque rotor, sans pour autant accroître outre mesure son encombrement ni affecter l'aisance de sa maintenance.

La liaison filaire est placée en prise d'appui contre un dit au moins organe de renvoi, pour infléchir son orientation d'extension et lui conférer ladite conformation en boucle. Selon une forme préférée de réalisation, ladite inflexion de la liaison filaire est de l'ordre de 360° pour maintenir la boucle globalement formée par la liaison filaire en conformation, tout en limitant l'encombrement radial de la liaison filaire au regard de l'axe de pivotement de la pale. Il n'est cependant pas à exclure de placer le long du chemin au moins un organe de renvoi intermédiaire pour adapter la conformation de la boucle selon une configuration choisie.

La dimension globale de la boucle, et la longueur de la liaison filaire comprise dans cette boucle, peuvent être aisément adaptées selon les besoins, sans pour autant affecter la préservation de la liaison filaire vis-à-vis des diverses contraintes qu'elle est amenée à subir. Le dispositif de raccordement est facilement transposable d'un rotor à un autre rotor de structures et d'organisations différentes et respectives.

Selon les besoins, le chemin est susceptible de comporter une pluralité d'organes d'appui intermédiaires répartis sur la longueur de la boucle entre ses extrémités, pour conforter son maintien en conformation selon une configuration désirée, telle qu'une configuration préférentiellement arquée centrée sur l'axe de pivot.

Selon une forme simple de réalisation, les dits organes de renvoi et/ou organes d'appui sont chacun agencés en galet. Un tel galet est susceptible d'être monté fixe ou d'être monté tournant, voire encore et de préférence est susceptible de prendre un appui élastique contre la liaison filaire.

Il est opportun de limiter au mieux l'encombrement de la liaison filaire au voisinage du pied de pale, et d'éviter au mieux les contraintes auxquelles la liaison filaire est soumise.

A cet effet et selon une forme avantageuse de réalisation, la liaison filaire, et plus particulièrement ladite boucle globale, est maintenue par le chemin selon une conformation globalement arquée centrée sur l'axe de pivotement. La liaison filaire, et plus particulièrement ladite boucle globale, est guidée en mobilité sur elle-même autour du dit axe de pivotement. Le chemin guide la liaison filaire en mobilité sur elle-même autour du dit axe de pivotement, sous l'effet de son entraînement en mobilité sur elle-même provoqué par un pivotement de la pale.

Une telle conformation globalement arquée de l'a liaison filaire, voire plus particulièrement de ladite boucle globale, est potentiellement obtenue à partir d'organes de guidage de structure simple que comporte le chemin. De tels organes de guidage sont susceptibles d'être formés d'un ou de plusieurs organes de renvoi, potentiellement associés à un ou plusieurs doigts d'appui, et/ou d'une ou de plusieurs rampes de guidage.

Le chemin est potentiellement réduit à un ensemble d'organes structurellement simples pouvant au moins en partie être logés dans un module de montage facilement implantable indifféremment sur le pied de pale ou sur le moyeu. Un tel module de montage est par exemple un boîtier logeant la liaison filaire, et l'un au moins des dits organes de guidage, sans préjuger des modalités d'implantation propre de cet organe de guidage indifféremment sur le moyeu ou sur le pied de pale.

La tenue naturelle de la liaison filaire procurée par sa structure est potentiellement mise à profit pour le maintien en conformation arquée de la liaison filaire, notamment par l'exploitation d'une dite nappe flexible formant la liaison filaire. Une telle nappe flexible peut être aisément maintenue par le chemin en conformation dans son plan général considéré suivant sa dimension s'étendant parallèlement au dit axe de pivotement de la pale, en exploitant sa tenue naturelle dans ledit plan général.

A cet effet, les organes de guidage composant le chemin peuvent comporter une gorge ou analogue de guidage de la nappe dans son dit plan général. Par exemple l'un au moins des organes formant le chemin est agencé en galet orienté suivant un axe d'extension parallèle à l'axe de pivotement de la pale. Un tel galet, formant indifféremment un dit organe de renvoi ou un dit organe d'appui, peut être agencé en réa ménageant un logement de guidage localisée de la nappe dans son plan général.

Le chemin comprend de préférence deux parois courbes en vis-à-vis centrées sur l'axe de pivotement. Les dites parois ménagent entre elles un espace de retenue en conformation arquée de la liaison filaire à l'encontre de sa déformation vis-à-vis d'une telle conformation arquée. Il est à considérer qu'une telle déformation pourrait notamment être provoquée sous l'effet des forces centrifuges générées par la mise en rotation du moyeu.

Il est à considérer que le chemin comprend notamment au moins un organe de guidage en conformation et en mobilité sur elle-même de la liaison filaire. Le dit organe de guidage peut comprendre l'un quelconque au moins des organes de guidage suivants :
- ) au moins un organe de renvoi de la liaison filaire refermée en au moins une boucle sur elle-même. La dite boucle est mobile sur elle-même en accompagnement du mouvement de pivotement des pales.
- ) au moins un doigt d'appui, sinon une pluralité de doigts d'appui répartis le long de la liaison filaire. Le ou les doigts d'appui maintiennent la liaison filaire en conformation, telle qu'en dite conformation arquée.
- ) au moins une rampe de guidage de la liaison filaire en conformation, telle qu'en dite conformation arquée.

Un tel énoncé d'organes de guidage potentiels est donné à titre indicatif, et ne saurait être considéré comme restrictif au regard d'un quelconque agencement du chemin choisi selon une configuration souhaitée de mise en conformation de la liaison filaire par le chemin.

Dans ce contexte, les dits moyens de mise sous tension de la liaison filaire sont indifféremment interposés entre :
- ) la liaison filaire et l'un quelconque au moins d'un dit au moins organe de guidage, et/ou
- ) la liaison filaire et le moyeu, par l'intermédiaire de l'un quelconque au moins d'un dit au moins organe de guidage.

Plus particulièrement, les dits moyens de mise sous tension de la boucle sont susceptibles d'être incorporés à l'un quelconque au moins d'un dit organe de guidage. Par exemple, l'un au moins des organes de renvoi et/ou des doigts d'appui est agencé en galet intégrant un organe à déformation élastique. Par exemple encore, l'un au moins des organes de renvoi et/ou des doigts d'appui est agencé en galet à excentrique. Par exemple encore, un organe élastiquement déformable est interposé entre l'organe de renvoi et/ou les doigts d'appui, et l'organe sur lequel l'organe de renvoi et/ou les doigts d'appui sont montés, moyeu notamment. Par exemple encore, une dite rampe est susceptible de comporter un ressort à lamelle contre lequel prend appui la liaison filaire.

Selon une forme avantageuse de réalisation, un dit au moins organe de renvoi est guidé en mobilité le long d'une piste de forme en accompagnement de la mobilité sur elle-même de la liaison filaire. De telles dispositions permettent de réduire la longueur de la liaison filaire sans affecter son accompagnement en mobilité pour un quelconque débattement angulaire d'une pale d'un quelconque rotor.

La dite piste de forme est de préférence ménagée sur le moyeu, et guide le déplacement de l'organe de renvoi sous l'effet de la poussée exercée par la liaison filaire entraînée en mobilité sur elle-même par la pale mue en pivotement, et/ou exercée par des moyens à déformation élastique.

Plus particulièrement, il est avantageusement mis à profit de dits moyens de mise sous tension de la liaison filaire pour former des moyens de rappel de l'organe de renvoi. De tels moyens de rappel entraînent l'organe de renvoi qui exerce alors une poussée sur la liaison filaire en accompagnement d'un pivotement de la pale, suivant un sens inverse à celui suivant lequel la liaison filaire exerce une dite poussée contre l'organe de renvoi.

A cet effet, les dits moyens de mise sous tension de la liaison filaire comprennent un montage en mobilité sur le moyeu de l'organe de renvoi, et des moyens élastiquement déformables interposés entre l'organe de renvoi et la piste de forme ménagée sur le moyeu. De tels moyens élastiquement déformables forment des moyens de rappel en position de l'organe de renvoi et d'entraînement de la liaison filaire sous l'effet d'une poussée exercée par l'organe de renvoi sur la liaison filaire en accompagnement d'un pivotement de la pale suivant un sens prédéfini.

La liaison filaire est avantageusement logée au moins partiellement à l'intérieur d'un boîtier de protection. La liaison filaire étant maintenue en dite conformation arquée, un tel boîtier de protection est susceptible d'être de faible encombrement, radialement notamment, en étant de conformation au moins arquée sinon en anneau.

Plus particulièrement, le boîtier est au moins conformé en arceau sinon en anneau, et est de préférence monté sur le pied de pale avec lequel pied de pale le boîtier est conjointement mobile en pivotement.

Le boîtier ceinture avantageusement au moins partiellement le pied de pale, et plus particulièrement ceinture au moins partiellement une bague périphérique montée sur le pied de pale et porteuse du boîtier.

Selon cette forme de réalisation, le boîtier est conjointement mobile en pivotement avec le pied de pale. Selon une autre forme de réalisation, le boîtier est susceptible d'être monté sur le moyeu, au détriment de son encombrement obtenu minimisé par son montage sur le pied de pale.

Selon une forme préférée de réalisation, un ensemble comprenant au moins un dit organe de guidage et la liaison filaire, est avantageusement logé dans un dit boîtier. Un tel boîtier forme avantageusement un module de montage au moins de la liaison filaire sinon aussi d'au moins un dit organe de guidage, indifféremment sur le moyeu ou sur le pied de pale.

Le boîtier est préférentiellement porté par une bague montée sur le pied de pale en étant centrée sur le dit axe de pivotement. Ladite bague est avantageusement close à sa face de bout orientée vers la pale, par des opercules montés sur le pied de pale en étant disposés latéralement de part et d'autre de la pale.

Le moyeu est de préférence équipé d'un bouclier périphérique centré sur l'axe de rotation du moyeu. Ledit bouclier forme un organe de protection du boîtier, et comporte des passages respectifs d'émergence à son travers des bagues respectivement montées sur les différents pieds de pale.

Il est à considérer que le chemin de guidage est avantageusement exploité pour former au moins en partie les moyens d'attache de la liaison filaire respectivement sur le moyeu et sur le pied de pale.

Par exemple et selon une forme avantageuse de réalisation, un dit boîtier et au moins un dit organe de guidage forment les dits moyens d'attache. Il est à considérer que le dit boîtier et le dit au moins organe de guidage sont susceptibles d'être respectivement montés indifféremment sur le moyeu et sur le pied de pale.

La liaison filaire étant significativement préservée de contraintes, les connecteurs sont préservés d'efforts susceptibles de rompre leur mise en coopération entre eux. Les connecteurs peuvent être de structure simple, tel qu'agencés en connecteurs du type à fiches coaxiales d'emboîtement et de jonction électrique.

Tel que précédemment mentionné, la liaison filaire est de préférence agencée en nappe flexible intégrant au moins un câble, ladite nappe flexible étant maintenue en conformation dans son plan général par le chemin.

Dans le cadre de la présente invention, il est pris en considération une mobilité relative en pivotement entre le moyeu et le pied de pale, autour du dit axe de pivotement. Ledit chemin procure un guidage et un éventuel renvoi de la liaison filaire sur elle-même au regard de ladite mobilité relative.

En conséquence, il est à considérer que le chemin est potentiellement porté par un organe du rotor indifféremment formé par le pied de pale ou par le moyeu. Plus particulièrement, le chemin est susceptible d'être monté au moins en partie indifféremment sur le moyeu et sur le pied de pale.

La présente invention a aussi pour objet un aéronef muni d'un rotor tel qu'il vient d'être décrit. Un tel aéronef est par exemple un avion à hélice(s) propulsive(s) ou un giravion muni d'au moins un rotor. Un tel rotor de giravion est notamment au moins un rotor principal, voire encore un rotor arrière ou une hélice propulsive dans le cadre d'un giravion à grande vitesse de propulsion et à long rayon d'action.

Des exemples de réalisation de la présente invention vont être décrits en relation avec les figures des planches annexées, dans lesquelles :

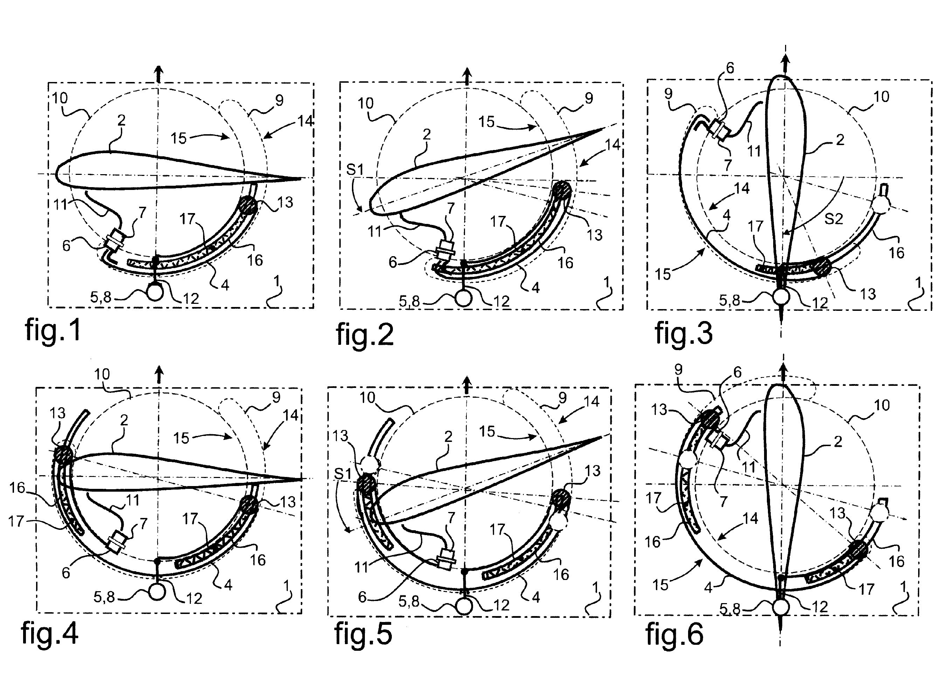

- les fig.1 à fig.3 sont des schémas illustrant un dispositif de raccordement en énergie électrique entre un moyeu et une pale d'un rotor d'aéronef selon un exemple de réalisation de la présente invention, le dit dispositif étant représenté sur les fig.1 à fig.3 en des positions respectives de pivotement de la pale.
- les fig.4 à fig.6 sont des schémas illustrant un dispositif de raccordement en énergie électrique entre un moyeu et une pale d'un rotor d'aéronef selon un autre exemple de réalisation de la présente invention, le dit dispositif étant représenté sur les fig.4 à fig.6 en des positions respectives de pivotement de la pale.

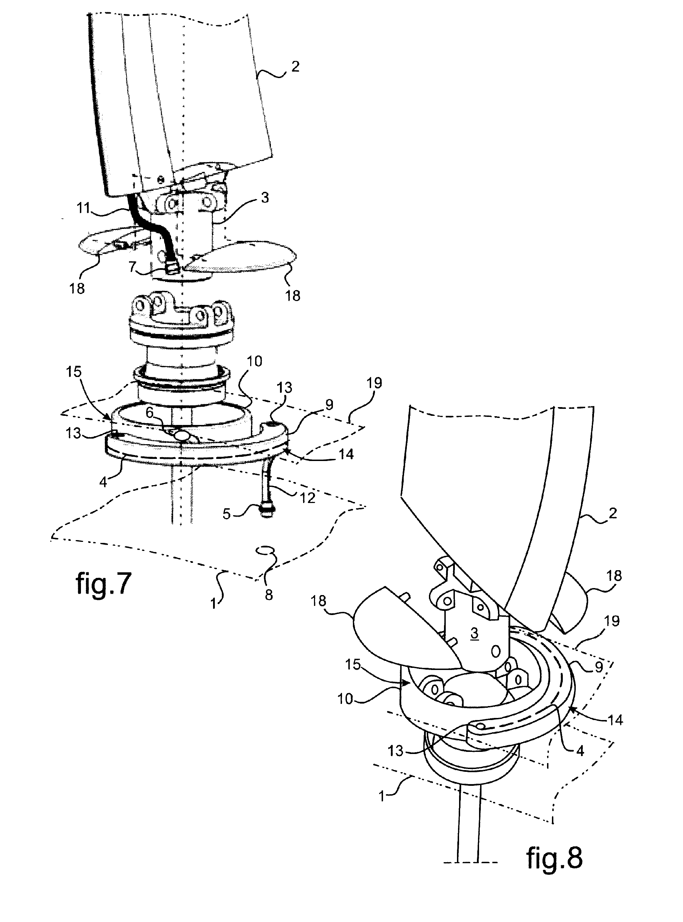

- les fig.7 et fig.8 sont des illustrations en perspective éclatée d'un dispositif de raccordement en énergie électrique entre un moyeu et une pale d'un rotor d'aéronef selon une forme de réalisation de la présente invention.

Sur les fig.1 à fig.8, un rotor à voilure tournante pour aéronef comporte un moyeu 1 sur lequel des pales 2 sont montées pivotantes. Sur les fig.7 et fig.8, il est illustré un exemple de montage pivotant d'une pale 2 sur le moyeu 1, par l'intermédiaire d'un pied de pale 3. Les pales 2 sont susceptibles d'incorporer un appareil électrique, tel qu'un appareil de dégivrage, qu'il est nécessaire d'alimenter en énergie électrique depuis le moyeu 1. On comprendra que les modalités d'amenée de l'énergie électrique depuis une source électrique de l'aéronef vers le moyeu 1 sont indifférentes dans le cadre de la présente invention.

Le rotor est équipé d'un dispositif de raccordement en énergie électrique entre le moyeu 1 et les pales 2. Il est représenté sur les figures des aménagements relatifs à l'alimentation électrique d'une seule pale 2. De tels aménagements sont à transposer à chacune des pales 2 montées sur le moyeu 1.

Le dispositif de raccordement met en oeuvre pour chacune des pales 2 une liaison filaire 4 munie à ses extrémités de connecteurs 5,6. La liaison filaire 4 est avantageusement du type agencée en nappe flexible intégrant une pluralité de câbles d'alimentation électrique.

Les connecteurs 5,6 sont avantageusement formés de fiches coaxiales coopérant par emboîtement avec des connecteurs 7,8 portés respectivement par le moyeu 1 pour un connecteur de moyeu 8 et par la pale 2 pour un connecteur de pale 7.

La liaison filaire 4 est logée dans un boîtier 9 conformé en arceau centré sur l'axe de pivotement A de la pale 2. Le boîtier 9 forme un module de protection et de montage de la liaison filaire 4 sur une bague 10 équipant la pale 2. La bague 10 est montée sur le pied de pale 3 tel qu'illustré sur les fig.7 et fig.8, en étant centrée autour de l'axe de pivotement A des pales 2.

Un connecteur 6 équipant la liaison filaire 4 à l'une de ses extrémités est monté sur la bague 10 pour coopérer avec le connecteur de pale 7. Selon la forme de réalisation illustrée, un premier tronçon 11 d'extrémité de la liaison filaire 4 est greffé à l'un de ses bouts sur la pale 2, et comporte à son autre bout le connecteur de pale 7.

Un connecteur 5 équipant la liaison filaire 4 est ménagé à l'autre de ses extrémités pour coopérer avec le connecteur de moyeu 8. Plus particulièrement, le connecteur 5 de la liaison filaire 4 est ménagé en bout d'un deuxième tronçon 12 d'extrémité de liaison filaire 4.

Sur les fig.1 à fig.6, la liaison filaire 4 est maintenue en conformation arquée centrée sur l'axe de pivotement A de la pale 2, par l'intermédiaire d'un chemin de guidage de la liaison filaire 4 en mobilité sur elle-même.

Selon la forme de réalisation illustrée, il est à considérer que les dits premier et deuxième tronçons 11, 12 de liaison filaire 4 sont exclus du guidage en mobilité sur elle-même de la liaison filaire 4 par le chemin.

Un tel chemin comprend au moins un organe de renvoi 13 de la liaison filaire 4 sur elle-même, pour lui conférer une conformation en boucle(s). Le chemin est encore susceptible de comporter deux parois courbes 14,15 placées à distance l'une de l'autre en vis-à-vis et centrées sur l'axe de pivotement A. Les dites parois 14,15 ménagent entre elles un espace de retenue en conformation arquée de la liaison filaire 4. Les dites parois 14,15 sont avantageusement respectivement formées par une paroi du boîtier 9 et par une paroi de la bague 10.

La liaison filaire 4 est entraînée en mobilité sur elle-même sous l'effet d'un pivotement de la pale 2. Selon les dispositions préférées représentées sur les figures, la liaison filaire 4 est aussi entraînée en mobilité sur elle-même sous l'effet d'un déplacement de l'un au moins des organes de renvoi 13. Selon de telles dispositions, l'organe de renvoi 13 est monté mobile sur le moyeu 1 le long d'une piste de forme 16 munie de moyens élastiquement déformables 17 interposés entre la piste de forme 16 et l'organe de renvoi 13. Le ou les organes de renvoi 13 sont par exemple chacun formés d'un galet à gorge, contre lequel galet à gorge la liaison filaire 4 refermée en boucle sur elle-même prend appui. L'un au moins des organes de renvoi 13 est de préférence monté sur le moyeu 1 tournant sur lui-même.

Par rapport à une position de référence de la pale 2 telle que représentée sur les fig.1 et fig.4, la pale 2 est susceptible de pivoter :
- ) selon un premier sens S1 suivant un angle de l'ordre de 20°, tel que représenté sur les fig.2 et fig.5, et
- ) selon un deuxième sens S2 opposé au premier sens S1 suivant un angle de l'ordre de 90°, tel que représenté sur les fig.3 et fig.6.

De tels sens S1 et S2 de pivotement et de telles valeurs de débattement angulaire de la pale 2 sont donnés à titre illustratif.

Le chemin procure un guidage sous tension de la liaison filaire 4, tel que par l'intermédiaire des moyens élastiquement déformables 17 interposés entre le dit au moins organe de renvoi 13 et la piste de forme 16.

Sous l'effet d'un pivotement de la pale 2 suivant un premier sens S1 ou S2, la liaison filaire prend appui contre un organe de renvoi 13 et provoque son déplacement le long de la piste de forme 16. Un pivotement en sens inverse S2 ou S1 de la pale 2 nécessite un déplacement en mobilité inverse de la liaison filaire 4 sur elle-même. Le dit organe de renvoi 13 est alors spontanément déplacé par les moyens élastiquement déformables 17, et entraîne la liaison filaire 4 en mobilité sur elle-même en accompagnement du pivotement de la pale 2.

Plus particulièrement, l'entraînement en mobilité de l'organe de renvoi 13 le long de la piste de forme 16, est provoqué selon des sens inverses de déplacement. Selon un premier sens, l'organe de renvoi 13 est déplacé sous l'effet de la poussée exercée par la liaison filaire 4 entraînée par la pale 2 mue en pivotement. Selon un deuxième sens, l'organe de renvoi 13 est déplacé sous l'effet de la poussée exercée par les moyens élastiquement déformables 17, l'organe repoussant alors la liaison filaire 4 en accompagnement d'un pivotement de la pale 2.

Sur les fig.1 à fig.3, il est constaté que pour un débattement angulaire donné de la pale 2 manoeuvrée en pivotement, le déplacement angulaire de l'organe de renvoi 13 correspond à la moitié du débattement angulaire de la pale 2.

Sur les fig.4 à fig.6, il est constaté que pour un débattement angulaire donné de la pale 2 manoeuvrée en pivotement, le déplacement angulaire de chacun des deux organes de renvoi 13 correspond au quart du débattement angulaire de la pale 2.

Une telle mobilité du ou des organes de renvoi permet de compenser la variation de longueur de la boucle formée par la liaison filaire 4 entre les connecteurs 5, 6 dont la liaison filaire 4 est équipée. Une telle compensation de variation de longueur est obtenue tout en procurant le maintien en conformation et la continuité de la liaison filaire 4 entre les connecteurs 5,6.

La mise en conformation en boucle de la liaison filaire 4 et la mobilité élastique du ou des organes de renvoi 13 procurent un compromis satisfaisant entre une optimisation d'un accompagnement par la liaison filaire 4 d'un quelconque pivotement de la pale 2, et un encombrement limité de la liaison filaire 4 et du chemin.

Le maintien en conformation arquée de la liaison filaire 4 autour de l'axe de pivotement A de la pale 2, permet de réduire au mieux l'encombrement de la liaison filaire 4 et de faciliter sa protection et son logement à l'intérieur du dit boîtier 9 ceinturant au moins en partie la bague 10 qui le porte.

Sur les fig.7 et fig.8, la face de bout de la bague 10 orientée vers la pale 2 est fermée par deux opercules 18 montés sur le pied de pale 3. Un bouclier 19 monté sur le moyeu 1 protège le boîtier 9. Ce bouclier 19 comporte des passages à travers lesquels émergent respectivement les bagues 10 équipant chacun des pieds de pale 3.

## Revendications

1. Rotor d'aéronef à voilure tournante équipé d'un dispositif de raccordement en énergie électrique entre un moyeu (1) et des pales (2) du dit rotor, les pales (2) étant chacune munies d'un pied de pale (3) par l'intermédiaire duquel les pales (2) sont individuellement montées mobiles en pivotement dans leur plan général sur le moyeu (1) autour d'un axe de pivotement (A), le dit dispositif de raccordement comprenant, pour chacune des pales (2) :
- ) au moins une liaison filaire 4 reliant, par l'intermédiaire de connecteurs (5,6) dont elle est équipée, un connecteur de moyeu (8) porté par le moyeu (1) avec un connecteur de pale (7) porté par la pale (3),
- ) des moyens d'attache (9,13) de la liaison filaire (4) entre ses extrémités respectivement au moyeu (1) et au pied de pale (3) en accompagnement de la mobilité en pivotement du pied de pale (3),
- ) un chemin de guidage de la liaison filaire (4) pour chacune des pales (2),
**caractérisé en ce que** pour chacune des pales (2), le chemin de guidage comprend des moyens de mise sous tension élastique (13,16, 17) de la liaison filaire (4), la liaison filaire (4) étant guidée sous tension mobile sur elle-même par le dit chemin (13, 14, 15, 16, 17) en accompagnement de la mobilité en pivotement du pied de pale (3).

2. Rotor d'aéronef selon la revendication 1,
**caractérisé en ce que** le dit chemin comprend au moins un organe de renvoi (13) de la liaison filaire (4) sur elle-même, le dit au moins organe de renvoi (13) conformant la liaison filaire (4) en au moins une boucle mobile sur elle-même.

3. Rotor d'aéronef selon la revendication 2,
**caractérisé en ce que** le chemin comprend au moins deux dits organes de renvoi (13) en prise sur les extrémités opposées de la boucle.

4. Rotor d'aéronef selon l'une quelconque des revendications 1 à 3,
**caractérisé en ce que** la liaison filaire (4) est maintenue par le chemin (13, 14, 15, 16, 17) selon une conformation globalement arquée centrée sur l'axe de pivotement (A), la liaison filaire (4) étant guidée en mobilité sur elle-même autour du dit axe de pivotement (A).

5. Rotor d'aéronef selon la revendication 4,
**caractérisé en ce que** le chemin comprend deux parois courbes (14,15) en vis-à-vis centrées sur l'axe de pivotement (A), les dites parois (14,15) ménageant entre elles un espace de retenue en conformation arquée de la liaison filaire (4).

6. Rotor d'aéronef selon l'une quelconque des revendications 1 à 5,
**caractérisé en ce que** le chemin (13, 14, 15, 16, 17) comprend au moins un organe de guidage en conformation et en mobilité sur elle-même de la liaison filaire (4), le dit organe de guidage comprenant l'un quelconque au moins des organes de guidage suivants :
- ) au moins un organe de renvoi (13) de la liaison filaire (4) refermée en au moins une boucle sur elle-même, la dite boucle étant mobile sur elle-même en accompagnement du mouvement de pivotement des pales (2),
- ) au moins un doigt d'appui, sinon une pluralité de doigts d'appui répartis le long de la liaison filaire (4), le ou les doigts d'appui maintenant la liaison filaire (4) en conformation,
- ) au moins une rampe de guidage de la liaison filaire (4) en conformation.

7. Rotor d'aéronef selon les revendications 5 et 6,
**caractérisé en ce que** de dits moyens de mise sous tension (13, 16, 17) de la liaison filaire (4) sont indifféremment interposés entre :
- ) la liaison filaire (4) et l'un quelconque au moins d'un dit au moins organe de guidage, et/ou
- ) la liaison filaire (4) et le moyeu (1) par l'intermédiaire de l'un quelconque au moins d'un dit au moins organe de guidage (13).

8. Rotor d'aéronef selon l'une quelconque des revendications 2 à 7,
**caractérisé en ce que** le dit au moins organe de renvoi (1·3) est guidé en mobilité le long d'une piste de forme (16) en accompagnement de la mobilité sur elle-même de la liaison filaire (4).

9. Rotor d'aéronef selon les revendications 6 et 8,
**caractérisé en ce que** les dits moyens de mise sous tension de la liaison filaire (4) comprennent un montage en mobilité sur le moyeu (1) de l'organe de renvoi (13) et des moyens élastiquement déformables (17) interposés entre l'organe de renvoi (13) et la piste de forme (16) ménagée sur le moyeu (1).

10. Rotor d'aéronef selon la revendication 9,
**caractérisé en ce que** les dits moyens élastiquement déformables (17) forment des moyens de rappel en position de l'organe de renvoi (13) et d'entraînement de la liaison filaire (4) sous l'effet d'une poussée exercée par l'organe de renvoi (13) en accompagnement d'un pivotement de la pale (2) suivant un sens (S1, S2) prédéfini.

11. Rotor d'aéronef selon l'une quelconque des revendications 1 à 10,
caractérisé **en ce que** la liaison filaire (4) est logée au moins partiellement à l'intérieur d'un boîtier (9) de protection.

12. Rotor d'aéronef selon les revendications 6 et 11,
**caractérisé en ce qu'**un ensemble comprenant au moins un dit organe de guidage (13) et la liaison filaire (4) est logé dans un dit boîtier (9), le boîtier (9) formant un module de montage au moins de la liaison filaire (4) sinon aussi d'au moins un dit organe de guidage (13), indifféremment sur le moyeu (1) ou sur le pied de pale (2).

13. Rotor d'aéronef selon la revendication 12,
**caractérisé en ce que** le boîtier (9) est au moins conformé en arceau sinon en anneau, et est monté sur le pied de pale (3) avec lequel pied de pale (3) le boîtier (9) est conjointement mobile en pivotement.

14. Rotor d'aéronef selon la revendication 13,
**caractérisé en ce que** le boîtier (9) est porté par une bague (10) montée sur le pied de pale (3) en étant centrée sur le dit axe de pivotement (A).

15. Rotor d'aéronef selon la revendication 14,
**caractérisé en ce que** ladite bague (10) est close à sa face de bout orientée vers la pale (2), par des opercules (18) montés sur le pied de pale (3) en étant disposés latéralement de part et d'autre de la pale (2).

16. Rotor d'aéronef selon l'une quelconque des revendications 14 et 15,
**caractérisé en ce que** le moyeu (1) est équipé d'un bouclier (19) périphérique centré sur l'axe de rotation du moyeu (1), ledit bouclier (19) formant un organe de protection du boîtier (9) et comportant des passages respectifs d'émergence à son travers des bagues (10) respectivement montées sur les différents pieds de pale (3).

17. Rotor d'aéronef selon la revendication 6 et l'une quelconque des revendications 11 à 16,
**caractérisé en ce qu'**un dit boîtier (9) et au moins un dit organe de guidage (13) respectivement montés indifféremment sur le moyeu (1) et sur le pied de pale (3), forment les dits moyens d'attache.

18. Rotor d'aéronef selon l'une quelconque des revendications 1 à 17,
**caractérisé en ce que** les dits connecteurs (5, 6, 7, 8) sont du type à fiches coaxiales d'emboîtement et de jonction électrique.

19. Rotor d'aéronef selon l'une quelconque des revendications 1 à 18,
**caractérisé en ce que** la liaison filaire (4) est agencée en nappe flexible intégrant au moins un câble, ladite nappe flexible étant maintenue en conformation dans son plan général par le chemin.

20. Rotor d'aéronef selon l'une quelconque des revendications 1 à 19,
**caractérisé en ce que** le chemin (13, 14, 15, 16, 17) est monté au moins en partie indifféremment sur le moyeu (1) et sur le pied de pale (2).

21. Aéronef muni d'un rotor selon l'une quelconque des revendications 1 à 20.

## Patentansprüche

1. Rotor eines Drehflügelluftfahrzeugs mit einer Anschlussvorrichtung für elektrische Energie zwischen einer Nabe (1) und Rotorblättern (2) des Rotors, wobei die Rotorblätter (2) jeweils mit einem Rotorblattfuß (3) versehen sind, über den die Rotorblätter (2) einzeln in ihrer Hauptebene schwenkbeweglich um eine Schwenkachse (A) auf der Nabe (1) montiert sind, wobei die Anschlussvorrichtung für jedes Rotorblatt (2) aufweist:
- mindestens eine Kabelverbindung (4), die über Verbinder (5, 6), mit denen sie ausgerüstet ist, einen Nabenverbinder (8), der auf der Nabe (1) angeordnet ist, mit einem Verbinder des Rotorblatts (7), der auf dem Rotorblatt (3) angeordnet ist, verbindet,
- Befestigungsmittel (9, 13) der Kabelverbindung (4) zwischen deren jeweiligen Enden an der Nabe (1) und am Fuß des Rotorblatts (3), die die Schwenkbeweglichkeit des Fußes des Rotorblatts (3) begleiten,
- einen Führungspfad der Kabelverbindung (4) für jedes der Rotorblätter (2),
**dadurch gekennzeichnet, dass** für jedes der Rotorblätter (2) der Führungspfad Mittel (13, 16, 17) aufweist, die die Kabelverbindung (4) elastisch spannen, wobei die Kabelverbindung (4) von dem Pfad (13, 14, 15, 16, 17) relativ zu sich selbst beweglich unter Spannung geführt ist, und die Schwenkbeweglichkeit des Fußes des Rotorblatts (3) begleitet.

2. Rotor eines Luftfahrzeugs nach Anspruch 1,
**dadurch gekennzeichnet, dass** der Pfad mindestens ein Organ (13) zur Rückstellung der Kabelverbindung (4) auf sich selbst aufweist, wobei das mindestens eine Rückstellorgan (13) die Kabelverbindung (4) zu mindestens einer zu sich selbst beweglichen Schleife formt.

3. Rotor eines Luftfahrzeugs nach Anspruch 2,
**dadurch gekennzeichnet, dass** der Pfad mindestens zwei Rückstellorgane (13) aufweist, die mit den sich gegenüberliegenden Enden der Schleife in Eingriff stehen.

4. Rotor eines Luftfahrzeugs nach einem der Ansprüche 1 bis 3,
**dadurch gekennzeichnet, dass** die Kabelverbindung (4) von dem Pfad (13, 14, 15, 16, 17) im Wesentlichen bogenförmig gekrümmt auf die Schwenkachse (A) zentriert gehalten wird, wobei die Kabelverbindung (4) relativ zu sich selbst um die Schwenkachse (A) beweglich geführt wird.

5. Rotor eines Luftfahrzeugs nach Anspruch 4,
**dadurch gekennzeichnet, dass** der Pfad zwei gekrümmte sich gegenüberliegende Wandungen (14, 15) aufweist, die auf die Schwenkachse (A) zentriert sind, wobei die Wandungen (14, 15) zwischen sich einen bogenförmigen Rückhalteraum für die Kabelverbindung (4) bilden.

6. Rotor eines Luftfahrzeugs nach einem der Ansprüche 1 bis 5, **dadurch gekennzeichnet, dass** der Pfad (13, 14, 15, 16, 17) mindestens ein Führungsorgan der Kabelverbindung (4) aufweist, das diese beweglich zu sich selbst haltert, wobei das Führungsorgan mindestens eines der folgenden Führungsorgane aufweist:
- mindestens ein Rückstellorgan (13) der Kabelverbindung (4), die mindestens eine Schleife um sich selbst herum bildet, wobei die Schleife zu sich selbst beweglich ist, und die Schwenkbewegung der Rotorblätter (2) begleitet,
- mindestens einen Abstützfinger, wenn nicht eine Mehrzahl von Abstützfingern, die entlang der Kabelverbindung (4) verteilt sind, wobei der oder die Abstützfinger die Kabelverbindung (4) in Form halten,
- mindestens eine Führungsrampe der Kabelverbindung (4).

7. Rotor eines Luftfahrzeugs nach den Ansprüchen 5 und 6,
**dadurch gekennzeichnet, dass** die Mittel (13, 16, 17) zum Spannen der Kabelverbindung (4) zwischen:
- der Kabelverbindung (4) und mindestens einem beliebigen Führungsorgan und/oder
- der Kabelverbindung (4) und der Nabe (1) über mindestens ein beliebiges Führungsorgan (13) angeordnet sind.

8. Rotor eines Luftfahrzeugs nach einem der Ansprüche 2 bis 7,
**dadurch gekennzeichnet, dass** mindestens ein Rückstellorgan (13) beweglich entlang geformten Bahnen (16) geführt ist, und die Beweglichkeit der Kabelverbindung (4) relativ zu sich selber begleitet.

9. Rotor eines Luftfahrzeugs nach den Ansprüchen 6 und 8,
**dadurch gekennzeichnet, dass** die Mittel zum Spannen der Kabelverbindung (4) eine bewegliche Montage des Rückstellorgans (13) auf der Nabe (1) und der elastisch verformbaren Mittel (17) umfassen, die zwischen dem Rückstellorgan (13) und der auf der Nabe (1) ausgebildeten geformten Bahn (16) angeordnet sind.

10. Rotor eines Luftfahrzeugs nach Anspruch 9,
**dadurch gekennzeichnet, dass** die elastisch verformbaren Mittel (17) Mittel bilden zum Zurückholen des Rückstellorgans (13) und zum Antreiben der Kabelverbindung (4) unter der Wirkung eines Drucks, der von dem Rückstellorgan (13) ausgeübt wird unter Begleitung einer Schwenkbewegung des Rotorblatts (2) in einem vorbestimmten Drehsinn (S1, S2).

11. Rotor eines Luftfahrzeugs nach einem der Ansprüche 1 bis 10,
**dadurch gekennzeichnet, dass** die Kabelverbindung (4) zumindest teilweise im Inneren eines Schutzgehäuses (9) gelagert ist.

12. Rotor eines Luftfahrzeugs nach den Ansprüchen 6 und 11,
**dadurch gekennzeichnet, dass** die Anordnung mindestens ein Führungsorgan (13) aufweist, und die Kabelverbindung (4) in einem Gehäuse (9) gelagert ist, wobei das Gehäuse (9) ein Modul zur Montage mindestens der Kabelverbindung (4), wenn nicht auch mindestens eines Führungsorganes (13), bildet, gleichgültig, ob auf der Nabe (1) oder auf dem Fuß des Rotorblatts (2).

13. Rotor eines Luftfahrzeugs nach Anspruch 12,
**dadurch gekennzeichnet, dass** das Gehäuse (9) bogenförmig, wenn nicht ringförmig ist, und auf dem Fuß (3) des Rotorblatts montiert ist, wobei der Fuß (3) des Rotorblatts zusammen mit dem Gehäuse (9) schwenkbeweglich ist.

14. Rotor eines Luftfahrzeugs nach Anspruch 13,
**dadurch gekennzeichnet, dass** das Gehäuse (9) von einem Ring (10) getragen wird, der auf dem Fuß (3) des Rotorblatts montiert ist, wobei der Ring auf der Schwenkachse (A) zentriert ist.

15. Rotor eines Luftfahrzeugs nach Anspruch 14,
**dadurch gekennzeichnet, dass** der Ring (10) auf seiner zu dem Rotorblatt (2) hin orientierten Endfläche durch Deckel (18) verschlossen ist, die auf dem Fuß (3) des Rotorblatts montiert sind, wobei diese seitlich zu beiden Seiten des Rotorblatts (2) angeordnet sind.

16. Rotor eines Luftfahrzeugs nach einem der Ansprüche 14 und 15,
**dadurch gekennzeichnet, dass** die Nabe (1) mit einem auf der Drehachse der Nabe (1) zentrierten Umfangsschild (19) versehen ist, wobei der Schild (19) ein Schutzorgan des Gehäuses (9) bildet und jeweilige Austrittspassagen durch ihn hindurch für die Ringe (10) aufweist, die jeweils auf den verschiedenen Füßen (3) des Rotorblatts montiert sind.

17. Rotor eines Luftfahrzeugs nach dem Anspruch 6 und einem der Ansprüche 11 bis 16,
**dadurch gekennzeichnet, dass** das Gehäuse (9) und mindestens ein Führungsorgan (13), die jeweils auf der Nabe (1) und dem Fluß (3) des Rotorblatts montiert sind, die Befestigungsmittel bilden.

18. Rotor eines Luftfahrzeugs nach einem der Ansprüche 1 bis 17,
**dadurch gekennzeichnet, dass** die Verbinder (5, 6, 7, 8) Koaxialstecker und elektrische Verbindungsstecker sind.

19. Rotor eines Luftfahrzeugs nach einem der Ansprüche 1 bis 18,
**dadurch gekennzeichnet, dass** die Kabelverbindung (4) als flexibles Band angeordnet ist, welches mindestens ein Kabel umfasst, wobei das flexible Band durch den Pfad in seiner Hauptebene in Form gehalten wird.

20. Rotor eines Luftfahrzeugs nach einem der Ansprüche 1 bis 19,
**dadurch gekennzeichnet, dass** der Pfad (13, 14, 15, 16, 17) mindestens zum Teil entweder auf der Nabe (1) oder auf dem Fuß (3) des Rotorblatts montiert ist.

21. Luftfahrzeug mit einem Rotor gemäß einem der Ansprüche 1 bis 20.

## Claims

1. Rotary-wing aircraft rotor equipped with an electrical energy connecting device for connecting electrical energy between a hub (1) and blades (2) of said rotor, the blades (2) each being provided with a blade root (3) via which the blades (2) are individually mounted so as to be pivotally movable in their general plane on the hub (1) about a pivot axis (A), said connecting device comprising, for each of the blades (2):
- ) at least one wired connection (4) which connects, via connectors (5, 6) with which it is equipped, a hub connector (8) carried by the hub (1) with a blade connector (7) carried by the blade (3),
- ) attaching means (9, 13) for attaching the wired connection (4) between its ends respectively to the hub (1) and to the blade root (3) while accompanying the pivotal movability of the blade root (3),
- ) a guide path for guiding the wired connection (4) for each of the blades (2),
**characterised in that**, for each of the blades (2), the guide path comprises elastic tensioning means (13, 16, 17) for elastic tensioning of the wired connection (4), the wired connection (4) being guided under tension so as to be movable on itself by said path (13, 14, 15, 16, 17) while accompanying the pivotal movability of the blade root (3).

2. Aircraft rotor according to claim 1,
**characterised in that** said path comprises at least one deflecting member (13) for deflecting the wired connection (4) on itself, said at least one deflecting member (13) shaping the wired connection (4) into at least one loop movable on itself.

3. Aircraft rotor according to claim 2,
**characterised in that** the path comprises at least two said deflecting members (13) in engagement on the opposite ends of the loop.

4. Aircraft rotor according to any one of claims 1 to 3,
**characterised in that** the wired connection (4) is held, by the path (13, 14, 15, 16, 17), in a generally arcuate shape centred on the pivot axis (A), the wired connection (4) being guided so as to be movable on itself about said pivot axis (A).

5. Aircraft rotor according to claim 4,
**characterised in that** the path comprises two facing curved walls (14, 15) centred on the pivot axis (A), said walls (14, 15) forming between them a space for maintaining the wired connection (4) in an arcuate shape.

6. Aircraft rotor according to any one of claims 1 to 5,
**characterised in that** the path (13, 14, 15, 16, 17) comprises at least one guide member for guiding the wired connection (4) in conformation and in movement on itself, said guide member comprising at least any one of the following guide members:
- ) at least one deflecting member (13) for deflecting the wired connection (4) closed on itself in at least one loop, said loop being movable on itself while accompanying the pivoting movement of the blades (2),
- ) at least one bearing finger, if not a plurality of bearing fingers distributed along the wired connection (4), the bearing finger or fingers maintaining the wired connection (4) in shape,
- ) at least one guide ramp for guiding the wired connection (4) in shape.

7. Aircraft rotor according to claims 5 and 6,
**characterised in that** said tensioning means (13, 16, 17) for tensioning the wired connection (4) are equally well interposed between:
- ) the wired connection (4) and at least any one of a said at least one guide member, and/or
- ) the wired connection (4) and the hub (1), via at least any one of a said at least one guide member (13).

8. Aircraft rotor according to any one of claims 2 to 7,
**characterised in that** said at least one deflecting member (13) is guided so as to be movable along a shaped track (16) while accompanying the movability of the wired connection (4) on itself.

9. Aircraft rotor according to claims 6 to 8,
**characterised in that** said tensioning means for tensioning the wired connection (4) comprise a movable mounting of the deflecting member (13) on the hub (1) and elastically deformable means (17) interposed between the deflecting member (13) and the shaped track (16) formed on the hub (1).

10. Aircraft rotor according to claim 9,
**characterised in that** said elastically deformable means (17) form means for returning the deflecting member (13) into position and for driving the wired connection (4) under the effect of a thrust exerted by the deflecting member (13) while accompanying a pivoting of the blade (2) in a predefined direction (S1, S2).

11. Aircraft rotor according to any one of claims 1 to 10,
**characterised in that** the wired connection (4) is housed, at least in part, inside a protective housing (9).

12. Aircraft rotor according to claims 6 and 11,
**characterised in that** an assembly comprising at least one said guide member (13) and the wired connection (4) is housed in a said housing (9), the housing (9) forming a mounting module for mounting at least the wired connection (4) if not also at least one said guide member (13), equally well on the hub (1) or on the blade root (2).

13. Aircraft rotor according to claim 12,
**characterised in that** the housing (9) is at least of arcuate shape if not ring shape, and is mounted on the blade root (3), with which blade root (3) the housing (9) is jointly pivotally movable.

14. Aircraft rotor according to claim 13,
**characterised in that** the housing (9) is carried by a ring (10) mounted on the blade root (3) and centred on said pivot axis (A).

15. Aircraft rotor according to claim 14,
**characterised in that**, at its end face (10) oriented towards the blade (2), said ring (10) is closed by covers (18) mounted on the blade root (3) and arranged laterally, on both sides of the blade (2).

16. Aircraft rotor according to any one of claims 14 and 15,
**characterised in that** the hub (1) is equipped with a peripheral shield (19) centred on the axis of rotation of the hub (1), said shield (19) forming a protective member for protecting the housing (9) and comprising respective passages for the emergence therethrough of the rings (10) respectively mounted on the various blade roots (3).

17. Aircraft rotor according to claim 6 and any one of claims 11 to 16,
**characterised in that** a said housing (9) and at least one said guide member (13), respectively mounted equally well on the hub (1) and on the blade root (3), form said attaching means.

18. Aircraft rotor according to any one of claims 1 to 17,
**characterised in that** said connectors (5, 6, 7, 8) are of the type having coaxial plugs for interfitting and for electrical connection.

19. Aircraft rotor according to any one of claims 1 to 18,
**characterised in that** the wired connection (4) is arranged as a flexible web incorporating at least one cable, said flexible web being held in shape in its general plane by the path.

20. Aircraft rotor according to any one of claims 1 to 19,
**characterised in that** the path (13, 14, 15, 16, 17) is mounted, at least in part, equally well on the hub (1) and on the blade root (2).

21. Aircraft provided with a rotor according to any one of claims 1 to 20.
